# EUROPEAN PATENT SPECIFICATION

(11) **EP 3 998 413 B1**
(45) Date of publication and mention of the grant of the patent: **29.11.2023**
(21) Application number: 20849594.5
(22) Date of filing: 28.07.2020
(51) Int. Cl.: F16D 25/0638, F16D 21/06

(54) **DUAL CLUTCH DEVICE**
DOPPELKUPPLUNGSVORRICHTUNG
DISPOSITIF D'EMBRAYAGE DOUBLE

(30) Priority: 02.08.2019 KR 20190094593
(43) Date of publication of application: 18.05.2022
(73) Proprietor: Valeo Kapec Co., Ltd., Daegu 42709 (KR)
(72) Inventor: KIM, Jung-Woo, Daegu 42709 (KR)
(74) Representative: Isarpatent
(86) International application number: PCT/KR2020/009791
(87) International publication number: WO 2021/025348

(56) References cited:
- EP-A2- 1 988 304
- DE-A1-102007 022 422
- DE-A1-102007 058 863
- DE-A1-102009 006 649
- DE-A1-102015 218 685
- DE-A1-102015 226 255
- JP-A- 2001 124 110
- KR-A- 20180 058 901
- KR-A- 20180 058 901
- KR-B1- 101 911 493
- KR-B1- 101 911 494
- KR-B1- 101 911 494
- US-A1- 2018 245 643
- US-A1- 2018 245 643

## Description

### [Technical Field]

Disclosed herein is a dual clutch device, more particularly, to a nest type wet dual clutch device.

### [Background Art]

A dual clutch device is installed between an engine and a transmission and configured to control the power of the engine transmitted to the transmission.

Dual clutch devices may be divided into dry and wet types based on whether or not lubricant is used. A wet dual clutch device may be classified into a nested type and a parallel type based on the arrangement of a first clutch assembly and a second clutch assembly. In addition, the wet dual clutch device may be classified into a piston type and a concentric slave cylinder (CSC) type based on an operation method.

The piston type dual clutch device needs a pressure chamber for moving the piston in one direction and a compensation chamber for moving the piston in the opposite.

The piston type dual clutch device may include a first piston with a large radius that acts on the first clutch assembly and a second piston with small radius that acts on the second clutch assembly. However, in the second clutch assembly operated by the second piston, the friction plate has a small area, which is disadvantageous in torque transmission. As one example, the transmitted torque can be expressed as T = n×µ×P×A×Rm (here, T is the transmission torque, n is the number of friction plates, P is the operating pressure, A is the cross-sectional area of the pressure chamber of the piston, and Rm is the effective radius). Since the effective radius of the friction plate provided in the second clutch is approximately 20% smaller than that of the first clutch assembly, the transmission torque of the second clutch assembly may be less than that of the first clutch assembly by approximately 20% under the same conditions.

To increase the transmission torque of the second clutch assembly, a method of increasing the number of the friction plates provided in the second clutch assembly or increasing the pressure of the fluid acting on the second piston may be considered. However, the method of increasing the number of the friction plates has a problem in that the axial length of the transmission increases and the manufacturing cost increases due to the relatively expensive friction plates. In addition, the method of increasing the hydraulic pressure has a problem in that fuel efficiency deteriorates because it consumes more output of the engine or motor to generate high pressure.

Meanwhile, the piston type dual clutch device has to include two pressure chambers and two compensation chambers, each provided for the operation of the two pistons. To implement all of these chamber structures, the number of parts might increase and the assembly process could be complicated, and the disassembly process for maintenance after assembly could also be complicated.

Korean Patent No. KR10-1133647 discloses a structure that a pair of carriers are all located at a certain point in the axial direction of the carrier hub to secure the pressurization cross sectional area of the pressure chamber for pressing the inner piston and to simplify the assembly and disassembly structure. However, according to that structure, an axial extension of the outer guide cylinder, an axial extension of the inner piston, an axial extension of the carrier, an axial extension of the outer piston and an axial extension of the inner guide are radially stacked in order from the outside in the radial direction to the inside. Because of that, there is a problem in that it is mpossible to secure a pressurized cross-sectional area of the pressure chamber for the outer piston.

DE 10 2015 226255 A1 provides a torque transmission device, which is rotatably mounted about a rotation axis. US 2018/245643 A1 provides an elastic return device able to generate a force opposing an element making possible the engaging or disengaging of a clutch of a wet-type clutch mechanism. KR 10-1911494 B1 provides a dual clutch device for a vehicle, which is employed in the vehicle and has two clutch bags.

### [Description of Disclosure]

### [Technical Problems]

Accordingly, an object of the present disclosure is to address the above-noted and other problems. Embodiments of the present disclosure provide a dual clutch device that may increase a transmission torque of a clutch assembly acting by a piston with a relatively small diameter, without increasing the number of friction plates or increasing the pressure of the fluid acting on the piston.

Furthermore, another object of the present disclosure is to provide a dual clutch device having a structure that is easy to assemble and disassemble, and which can sufficiently secure a pressing force for two pistons.

### [Technical Solutions]

The present invention is set out by the appended claims. A dual clutch device according to the present invention to solve above problems is provided as defined by independent claim 1. The embodiments are provided in the dependent claims.

The dual clutch device comprises a carrier hub which includes a flange extended from the outer surface of the carrier hub along the radial direction and a carrier which is connected to the flange and includes a first carrier and a second carrier.

The second carrier may have a smaller radius than the first carrier.

The carrier hub may be concentric with the center of rotation and extended along the axial direction.

The pair of the carriers may be connected with the carrier hub via the flange.

The flange may include a hub-axial extension extended along the axial direction. The hub-axial extension may be forwardly extended from a distal end of the flange.

The carrier hub may be fabricated by forging. The flange and the hub-axial extension may be fabricated together, when the carrier hub is fabricated by forging. Specifically, the carrier hub, the flange and the hub-axial extension may be integrally formed as one body not to be separable.

The carrier may include a carrier-axial extension extended from the flange along the axial direction. The carrier-axial extension may be backwardly extended from a distal end of the flange.

The hub-axial extension and the carrier-axial extension may substantially have the same radius. Accordingly, the hub-axial extension, the carrier-axial extension and the cross-sectional area of the flange may form a "T"-like shape.

Each of the two carriers may include a pair of clutch assemblies arranged in respective different radius. The first carrier may have a first clutch assembly and the second carrier may have a second clutch assembly that is provided on a smaller radius than the first clutch assembly.

The carrier may further include a carrier-radial extension outwardly extended from the carrier-axial extension along the radial direction.

The carrier-radial extension may be connected with a rear end of the carrier-axial extension.

The carrier-radial extension may be extended toward the first clutch assembly and/or the second clutch assembly.

The first carrier may be connected with the flange and the second carrier may be connected with the first carrier by welding or the like. Alternatively, the second carrier may be connected with the flange and the first carrier may be connected with the second carrier by welding or the like. Accordingly, the carrier hub and the carrier may be integrally coupled to each other and provided as one element.

With respect the axial direction of the carrier hub, a peripheral space of the carrier hub may be divided into a front space of the flange and a rear space of the flange by the flange and/or the carrier.

A first piston may forwardly move and press the first clutch assembly, and then backwardly move and release the pressure applied to the first clutch assembly. The second piston may forwardly move and press the second clutch assembly, and backwardly move and release the pressure applied to the second clutch assembly.

The first piston and the second piston may be provided in respective spaces that face each other, with the flange interposed therebetween.

The first piston may be in contact with the outer circumferential surface of the carrier hub behind the flange, and sliding-movable with respect to the carrier hub along the axial direction.

The second piston may be in contact with the outer circumferential surface of the carrier hub in front of the flange, and sliding-movable with respect to the carrier hub along the axial direction.

A first pressure chamber may be provided axially behind the first piston.

The first pressure chamber may be filled with a fluid for pressing the first piston to move the first piston forward.

A first compensation chamber may be provided in front of the first piston in the axial direction. The first compensation chamber may be provided between the flange and the first piston.

The first pressure chamber and the first compensation chamber may face each other, with the first piston interposed therebetween.

A second pressure chamber may be provided axially behind the second piston. The second pressure chamber may be provided between the second piston and the flange.

The second pressure chamber may be filled with a fluid for pressing the second piston to move the second piston forward.

A second compensation chamber may be axially in front of the second piston.

The second pressure chamber and the second compensation chamber may face each other, with the second piston interposed therebetween.

The second piston may include a second piston-radial extension radially extended from the carrier hub; and a second piston-inner axial extension axially extended from the second piston-radial extension. The second piston-inner axial extension may be forwardly extended from a distal end of the second piston-radial extension.

At least predetermined area of the outer circumferential surface of the second piston-inner axial extension may face the inner circumferential surface of the hub-axial extension.

A first pressure chamber-outer diameter seal may be disposed between the outer circumferential surface of the second piston-inner axial extension and the inner circumferential surface of the hub-axial extension. The first pressure chamber-outer diameter seal may be fixedly secured to the outer circumferential surface of the second piston-inner axial extension.

The inner circumferential surface of the hub-axial extension may define the outer diameter of the second pressure chamber.

The second pressure chamber may be defined by the outer circumferential surface of the carrier hub, the front surface of the flange, the inner circumferential surface of the hub-axial extension and the rear surface of the second piston-radial extension.

An inner circumferential surface of the second piston-inner axial extension of the second piston may define an outer diameter of the second compensation chamber of the second piston.

The outer diameter of the second pressure chamber may be larger than that of the second compensation chamber.

A front guide cylinder may be detachably coupled to the carrier hub in front of the second piston-radial extension.

The front guide cylinder may include a front guide-radial extension. The front guide-radial extension may be outwardly extended from a connecting portion with the carrier hub, and face a rear surface of a second driven plate.

The front guide cylinder may include a front guide-axial extension axially extended from the front guide-radial extension. The front guide-axial extension may have an outer circumferential surface of which at least predetermined area faces the inner circumferential surface of the second piston-inner axial extension.

A second compensation chamber-outer diameter seal may be disposed between the inner circumferential surface of the second piston-inner axial extension and the outer circumferential surface of the front guide-axial extension. The second compensation chamber-outer diameter seal may be secured to the front guide-axial extension.

The second compensation chamber may be defined by the outer circumferential surface of the carrier hub, the front surface of the second-piston-radial extension, the inner circumferential surface of the second piston-inner axial extension, the inner circumferential surface of the front guide-axial extension and the rear surface of the front guide-radial extension.

A front guide-snap ring may be coupled to the carrier hub in front of the front guide cylinder. The front guide-snap ring may limit the forward moving range of the front guide cylinder.

The second piston may further include a second piston-outer axial extension. The second piston-outer axial extension may be disposed radially more outward than the second piston-inner axial extension. The second piston-inner axial extension and the second piston-outer axial extension may be interconnected to bypass and surround the hub-axial extension.

The inner circumferential surface of the second piston-outer axial extension may face the outer circumferential surface of the hub-axial extension and the outer circumferential surface of the carrier-axial extension, not in contact with them.

The second piston may be in contact with the carrier so that the backward movement of the second piston can be limited.

The first piston may include a first piston-radial extension radially extended from the carrier hub.

The first compensation chamber may be provided between the flange and the first piston-radial extension.

The outer diameter of the first compensation chamber may be defined by the carrier-axial extension.

The first piston may include a first piston-axial extension axially extended from the first piston-radial extension. The first piston-axial extension may be backwardly extended from the distal end of the first piston-radial extension.

At least predetermined area of the outer circumferential surface of the first piston-axial extension may face the inner circumferential surface of the carrier-axial extension.

A first compensation chamber-outer diameter seal may be disposed between the first piston-axial extension and the carrier-axial extension. The first compensation chamber-outer diameter seal may be attached to the outer circumferential surface of the first piston-axial extension.

The first compensation chamber may be defined by the outer circumferential surface of the carrier hub, the rear surface of the flange, the inner circumferential surface of the carrier-axial extension and the front surface of the first piston-radial extension.

The carrier-axial extension may form a certain portion of a path for connecting the connecting portion between the carrier and the carrier hub to the area where the first clutch assembly and the second clutch assembly are provided.

The carrier may include an auxiliary cylinder secured to the inner circumferential surface of the carrier-axial extension, in contact. The auxiliary cylinder may include an auxiliary cylinder-axial extension axially extended. The inner circumferential surface of the auxiliary-axial extension may form the inner circumferential surface of the carrier-axial extension.

A rear guide cylinder may be detachably coupled to the carrier hub behind the first piston.

The rear guide cylinder may include a rear guide-radial extension outwardly extended from the connecting portion with the carrier hub along the radial direction.

A stopper may be provided in the rear guide-radial extension and the stopper may be protruded more forward than the rear guide-radial extension. The stopper may contact with the rear surface of the first-piston-radial extension to limit the backward moving of the first piston.

The rear guide cylinder may include a rear guide-axial extension backwardly extended from the rear guide-radial extension. The rear guide-axial extension may have an outer circumferential surface of which at least predetermined area faces the inner circumferential surface of the first piston-axial extension of the first piston.

The rear guide-snap ring may be coupled to the carrier hub more behind the rear guide cylinder. The rear guide-snap ring may limit the backward movement of the rear guide cylinder.

The first driven plate may radially face the first carrier, with the first clutch interposed therebetween. The first driven plate may be connected with the first spline hub.

The second driven plate may radially face the second carrier, with the second clutch assembly interposed therebetween. The second driven plate may be connected with the second spline hub.

The rear surface of the first driven plate may radially face the front surface of the second driven plate. The rear surface of the second driven plate may face the front surface of the front guide-radial extension.

When the first piston presses the first clutch assembly by sliding forward, the first carrier may be coupled to the first plate so that they cannot rotate relatively. When the first piston releases the pressure applied to the first clutch assembly by sliding backward, the first carrier and the first driven plate may be decoupled from each other.

When the second piston presses the second clutch assembly by sliding forward, the second carrier may be coupled to the second driven plate so that they cannot rotate relatively. When the second piston releases the pressure applied to the second clutch assembly by sliding backward, the second carrier and the second driven plate may be decoupled from each other.

A pressure path may be provided in the carrier hub to be an oil channel for supplying oil to the first pressure chamber and to the second pressure chamber.

A compensation path may be provided in the carrier hub to be an oil channel for supplying oil to the first compensation chamber and to the second compensation chamber.

A carrier-hole facing a piston-hole may be provided in the carrier. The piston-hole may be provided in the second piston-outer axial extension and the oil flowing in the first compensation chamber may pass through the piston-hole.

The oil supplied through the compensation path may flow through the carrier-hole and the piston-hole.

### [Advantageous Effect]

Accordingly, the present disclosure has following advantageous effects. According to the present disclosure, the pair of the carriers may be coupled to the carrier hub through one flange. The first piston and the second piston may be disposed in the respective spaces facing each other, with the flange interposed therebetween. Accordingly, each component may be assembled and dissembled in front of or behind the carrier hub.

In addition, the inner circumferential surface of the hub-axial extension forwardly extended from the distal end of the single flange may define the outer diameter of the second pressure chamber. The inner circumferential surface of the carrier-axial extension backwardly extended to be coupled to the clutch assembly may define the outer circumferential surface of the first compensation chamber. Accordingly, the pressing cross sectional area of the second pressure chamber may be sufficiently secured and the outer circumferential surface of the first pressure chamber may be also sufficiently secured.

In addition, the inner circumferential surface of the hub-axial extension forwardly extended from distal end of the flange may define the outer circumferential diameter of the second pressure chamber. The inner circumferential surface of the second piston-inner axial extension provided in the second piston which is slidingly-movable along the inner circumferential surface of the hub-axial extension may define the outer diameter of the second compensation chamber. Therefore, pressure area of the second pressure chamber is larger than that of the second compensation chamber.

In addition, the dual clutch device according to the present disclosure may sufficiently secure the transmission torque of the second clutch assembly having the small radius, even without additionally providing the second clutch assembly with a friction plate or raising the hydraulic pressure for pressing the second piston.

In addition, the second piston and the first piston may be disposed in front of and behind the flange of the carrier hub respectively. The front guide cylinder and the rear guide cylinder may be detachably disposed at the carrier hub, in front of the second piston and behind the first piston respectively. Accordingly, the dual clutch device may be easily and efficiently assembled and dissembled.

The advantageous effects of the display device may not be limited what is mentioned above. Other effects that are not mentioned above may be understood and expected from following detailed descriptions of embodiments by people those skilled in the art.

### [Brief Description of Drawings]

FIG. 1 is a perspective view of a dual clutch device according to the present disclosure;
FIG. 2 is a sectional-perspective view of the dual clutch device shown in FIG. 1;
FIG. 3 is a sectional view illustrating half of the dual clutch device with respect to an axis of rotation shown in FIG. 2; and
FIG. 4 is the cross-sectional view of FIG. 3 illustrating a flow path.

### [Numeral References]

1: Dual clutch device 2: Inner shaft 3: Outer shaft
10: Carrier hub 11: Flange portion 23: Hub-axial extension
20: Carrier 201: Connecting portion 202: Carrier-axial extension
203: Carrier-radial extension 21: First carrier 22: Second carrier 23: Carrier-perforation
31: First clutch assembly 32: Second clutch assembly
41: First driven plate 411: First spline hub 42: Second driven plate 422: Second spline hub 51: First piston 511: First piston-radial extension 512: First piston-axial extension 52: Second piston 521: Second piston-radial extension 522: Second piston-inner axial extension 523: Second piston-outer axial extension 524: Piston-hole
61: First pressure chamber 611: First pressure chamber-outer diameter seal 612: First pressure chamber-inner diameter seal 62: First compensation chamber 621: First compensation chamber-outer diameter seal 622: First compensation-inner diameter seal 623: First spring 63: Second pressure chamber 632: Second pressure-outer diameter seal 633: Second pressure-inner diameter seal 64: Second compensation chamber 641: Second compensation chamber-outer diameter seal 642: Second spring
71: Rear guide cylinder 711: Rear guide-radial extension 712: Stopper 713: Rear guide-radial extension 72: Front guide cylinder 721: Front guide-radial extension 723: Front guide-axial extension 73: Rear guide-snap ring 74: Front guide-snap ring 75: Auxiliary cylinder 751: Auxiliary cylinder-axial extension 752: Auxiliary cylinder-radial extension
81: Drive shaft 82: Drive plate 83: Third snap ring 84: Fourth snap ring 85: Drive ring
91: Pressure flow path 911: First pressure flow path 912: Second pressure flow path 92: Compensation flow path 921: First compensation flow path 922: Second compensation flow path

### [Detailed Description of Exemplary Embodiment]

Description will now be given in detail according to exemplary embodiments disclosed herein, with reference to the accompanying drawings. For the sake of brief description with reference to the drawings, the same or equivalent components may be provided with the same reference numbers, and description thereof will not be repeated.

As such, the present disclosure should be construed to extend to any alterations, equivalents and substitutes in addition to those which are particularly set out in the accompanying drawings. Terms of respective elements used in the following description are terms defined taking into consideration of the functions obtained in the present invention. Therefore, these terms do not limit technical elements in the present invention. Further, the defined terms of the respective elements will be called other terms in the art.

The accompanying drawings are used to help easily understand various technical features and it should be understood that the embodiments presented herein are not limited by the accompanying drawings. Regardless of numeral references, the same or equivalent components may be provided with the same reference numbers and description thereof will not be repeated. For the sake of brief description with reference to the drawings, the sizes and profiles of the elements illustrated in the accompanying drawings may be exaggerated or reduced and it should be understood that the embodiments presented herein are not limited by the accompanying drawings.

Terminology that is used in the present disclosure is limited to only for embodiments herewith but made only to make it easy to understand the present disclosure. A singular representation may include a plural representation unless it represents a definitely different meaning from the context. Terms such as "include" or "has" are used herein and should be understood that they are intended to indicate an existence of several components, functions or steps, disclosed in the specification, and it is also understood that greater or fewer components, functions, or steps may likewise be utilized.

It will be understood that although the terms first, second, etc. may be used herein to describe various elements, these elements should not be limited by these terms. These terms are generally only used to distinguish one element from another.

It will be understood that when an element is referred to as being "connected with" another element, the element can be directly connected with the other element or intervening elements may also be present. In contrast, when an element is referred to as being "directly connected with" another element, there are no intervening elements present.

Hereinafter, expressions of 'a component is provided or disposed in an upper or lower portion' may mean that the component is provided or disposed in contact with an upper surface or a lower surface.

Terminology that is used in the present disclosure is limited to only for embodiments herewith but made only to make it easy to understand the present disclosure. Unless defined otherwise, all terms used herein, including technical or scientific terms, have the same meaning as commonly understood by a person skilled in the art to which this invention pertains.

For convenience of description, the direction along the longitudinal direction of the axis forming the center of rotation of the dual clutch may be referred to as the axial direction. The front-rear direction or the axial direction may be a direction parallel to the rotation axis. The front direction (the forward direction) may refer to a direction toward any one direction (hereinafter, the first axial direction), for example, toward an engine which is a power source. The rear direction (the backward direction) may refer to the other direction (hereinafter, the second axial direction), for example, the direction toward a transmission. Therefore, a front surface may mean a surface directed forwardly and a rear surface may mean a surface directed backwardly.

A radial direction may mean a direction closer to the center or a direction away from the center along a straight line passing through the center of the rotation axis on a plane perpendicular to the rotation axis. A direction away from the center in the radial direction may be referred to as a centrifugal direction, and a direction closer to the center may be referred to as a centripetal direction.

A circumferential direction may mean a direction surrounding a circumference of the rotation shaft. An outer circumference may mean an outer circumference of the rotation axis and an inner circumference may mean an inner circumference of the rotation axis. Accordingly, the outer circumferential surface may be a surface facing away from the rotation shaft, and the inner circumferential surface may be a surface facing the rotation shaft.

A circumferential lateral surface may mean a side of which normal line faces the circumferential direction.

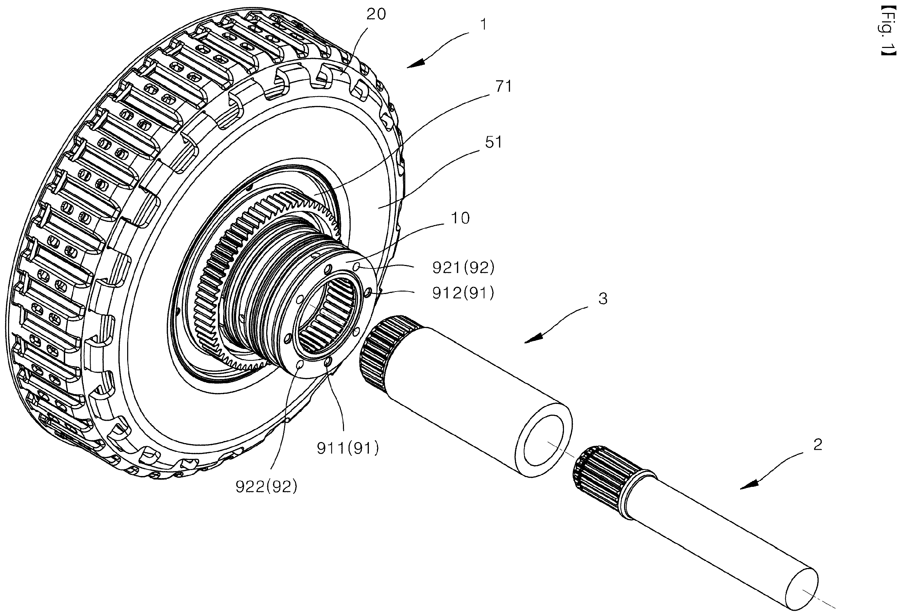

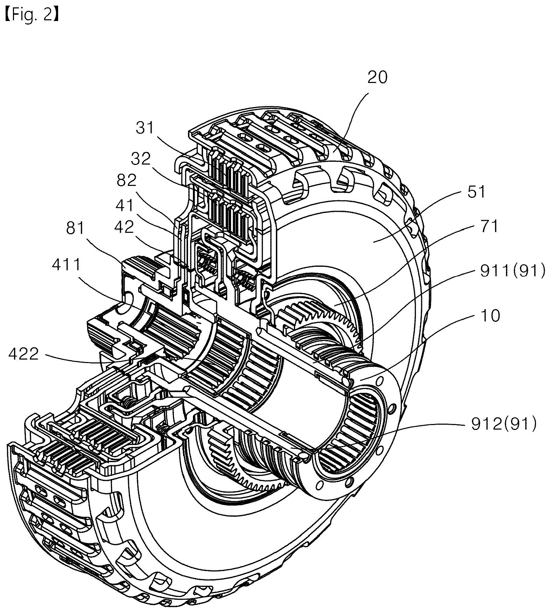

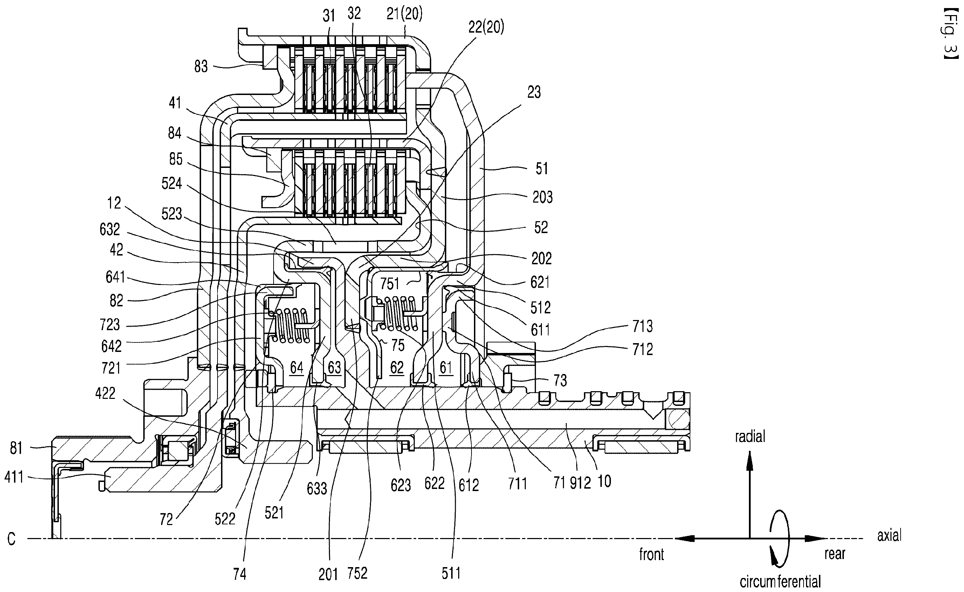

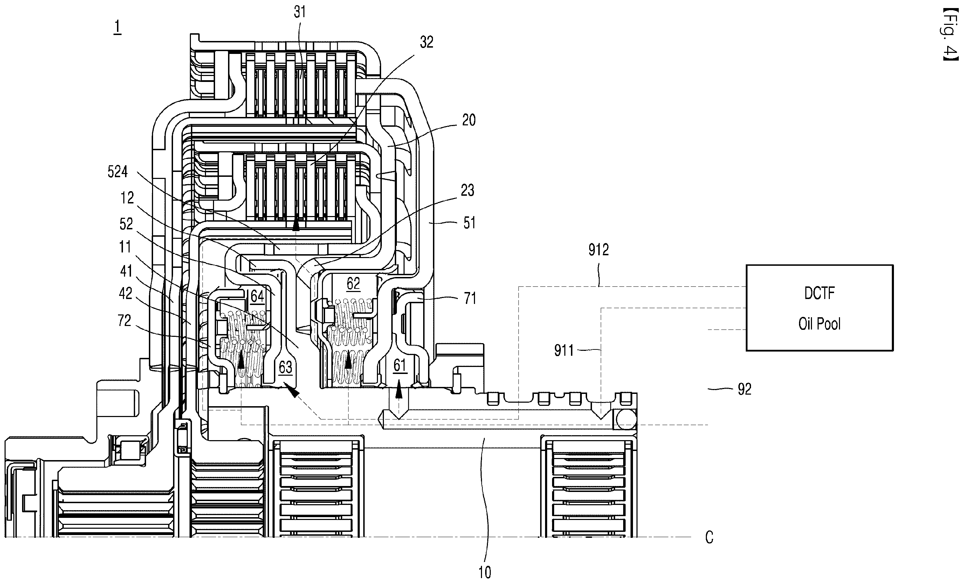

Referring to FIGS. 1 to 4, the dual clutch according to the present disclosure will be described.

The dual clutch 1 may be connected with an engine in the front and a transmission in the rear. The dual clutch 1 may receive the driving force of the engine and selectively transmit it to the transmission. The dual clutch 1 may include a drive shaft 81 connected to with the engine in the front and inner and outer shafts 2 and 3 of the transmission in the rear. The inner shaft 2 and the outer shaft 3 may be respectively connected with a first spline hub 411 and a second spine hub 422 that are provided in the dual clutch 1, such that they can be rotationally constrained.

A drive plate 82 may be extended from the drive shaft 81 in a radial direction, and the drive plate 82 may be connected with the drive shaft 81. The drive plate 82 may be fixed to an outer circumference of the drive shaft 82 by welding or the like. Accordingly, the drive plate 82 may rotates integrally with the drive shaft 81.

A carrier hub 10 may be disposed behind the driving shaft 81. The carrier hub 10 may be concentric with the drive shaft 81. The carrier hub 10 may have a hollow pipe shape along a central axis. A flange 11 may be extended from a predetermined area of the carrier hub 10 in a radial direction. A hub-axial extension 12 may be connected with a radial-outer end of the flange 11. The hub-axial extension 12 may be axially extended toward the front from the flange 11. An inner circumferential surface of the hub-axial extension 12 may form a bore having the same inner diameter along the axial direction.

The carrier hub 10, the flange 11 and the hub-axial extension 12 may be integrally processed through forging such as cutting. Accordingly, the carrier hub 10, the flange 11 and the hub-axial extension 12 can rotate integrally.

The carrier hub 10 may be interconnected with the carrier 20 to make the carrier 20 relatively non-rotatable. The carrier may include a connecting portion 201 connected with the flange 11 of the carrier hub 10. The connecting portion 201 may have a circular ring plate shape extending in a radial direction and a front surface of the connecting portion 201 may be in contact with a rear surface of flange 11. The connecting portion 201 may be fixed to the flange portion 11 by welding or the like, while in contact with the flange portion 11.

A carrier-axial extension 202 may be connected to a radial outer end of the connecting portion 201. The carrier-axial extension 202 may be extended from the connecting portion 201 rearward in a axial direction. The inner circumferential surface of the carrier-axial extension 202 may be formed in a bore shape having the constant radius along the axial direction. The radius of the carrier-axial extension 202 may be substantially equal to that of the hub-axial extension 12. Accordingly, the cross-sections of the hub-axial extension 12, the carrier-axial extension 202 and the flange 11 may be similar to a "T" shape.

The carrier-radial extension 203 may be connected with a rear end of the carrier-axial extension 202. The carrier-radial extension 203 may be outwardly extended from the carrier-axial extension 202 in a radial direction.

The first carrier 21 may be connected to an outer radial rim of the carrier-radial extension 203. The second carrier 22 may be connectedly provided between the first carrier 21 and the carrier-axial extension 202.

One embodiment exemplifies a structure in which the connecting portion 201, the carrier-axial extension 202, the carrier-radial extension 203 and the first carrier 21 may be integrally molded. Hence, the second carrier 22 may be joined by welding or the like to form the integral body. However, the method of fabricating the carrier 20 according to the present disclosure is not limited thereto.

The first carrier 21 and the second carrier 22 may be forwardly extended from the carrier-radial extension 203. The inner circumferential surfaces of the first carrier 21 and the second carrier 22 may have keys and grooves alternately formed in the circumferential direction.

A first clutch assembly 31 and a second clutch assembly 322 may be installed in the inner circumferential surfaces of the first carrier 21 and the second carrier, respectively. A first driven plate 41 and a second driven plate 42 may have the first carrier 21 and the second carrier 22 with the first clutch assembly 31 and the second clutch assembly interposed therebetween, respectively, and disposed to face each other in the radial direction.

The outer rims of the first driven plate 41 and the second driven plate 42 may have keys and grooves that are alternately formed in the circumferential direction.

The clutch assembly may have a clutch plate and a friction plate that are alternately arranged along the axial direction. When the clutch plate and the friction plate are pressed against each other, power may be transmitted between the clutch plate and the friction plate, and when the plates are separated from each other, power may not be transmitted between the clutch plate and the friction plate.

The clutch plate of the first clutch assembly 31 may engaged with the concavo-convex shaped irregularities formed in the inner circumferential surface of the first carrier 21 to be rotationally constrained with respect to the first carrier. The friction plate of the first clutch assembly 31 may engage with the concavo-convex shaped irregularities formed in the first driven plate 41 to be rotationally constrained with respect to the first driven plate 41.

The clutch plate of the second clutch assembly 32 may engaged with the concavo-convex shaped irregularities formed in the inner circumferential surface of the second carrier 22 to be rotationally constrained with respect to the second carrier 22. The friction plate of the first clutch assembly 32 may engage with the concavo-convex shaped irregularities formed in the second driven plate 42 to be rotationally constrained with respect to the second driven plate 42.

The first driven plate 41 may be inwardly extended along the radial direction to be connected with the first spline hub 411. The second driven plate 42 may be inwardly extended along the radial direction to be connected with the second spline hub 422. The radially extended area of the first driven plate 41 may be positioned behind the drive plate 82, and the radially extended area of the second driven plate 42 may be positioned behind the radially extended area of the first driven plate 41. The radially extended area of the first driven plate 41 and the second driven plate 42 may be respectively connected with the first spline hub 411 and the second spline hub 422 through the gap between the drive shaft 81 and the carrier hub 10.

The first spline hub 411 may be disposed radially inside and behind the drive shaft 81. The second spline hub 422 may be disposed behind the first spline hub 411, while having a larger radius than the first spline hub 411. The drive shaft 81 and the first spline hub 411 may be supported to be relatively rotatable by the bearing provided between the drive shaft 81 and the first spline hub 411. The first spline hub 411 and the second spline hub 422 may be supported to be relatively rotatable by the bearing disposed between the first spline hub 411 and the second spline hub 422. The third snap ring 83 may support the drive plate 82 so that the drive plate 82 may not be forwardly pushed with respect to the first carrier 21.

As mentioned above, the first spline hub 411 may be coupled to the inner shaft 2 to be rotationally constrained. The second spline hub 422 may be coupled to the outer shaft 3 to be rotationally constrained.

The carrier hub 10 and the outer shaft 3 may be supported to be relatively rotatable by the bearing disposed between the inner circumferential surface of the carrier hub 10 and the outer shaft 3.

While engaging with the concavo-convex irregularities formed in the inner circumferential surface of the first carrier 21, the distal end of the drive plate 82 may be inserted in the first carrier 21 from the front along the axial direction. Accordingly, the relative rotation of the drive plate 82 and the first carrier 21 may be constrained. The rear surface of the distal end of the drive plate 82 may be in contact with the front end of the first clutch assembly 31. The third snap ring 83 may be inserted in the first carrier 21 from the inner circumferential surface of the first carrier 21 at the front of the drive plate 82.

A drive ring 85 separately provided from the drive plate 82 may be inserted in the second carrier 22 along the axial direction from the front of the second carrier, while engaging with the concavo-convex shaped irregularities provided in the inner circumferential surface of the second carrier 22. A rear surface of the drive ring 85 may be in contact with the front end of the second clutch assembly 32. A fourth snap ring 84 may be inserted in the second carrier 22 from the inner circumferential surface of the second carrier 22 at the front of the drive ring 85. The fourth snap ring 84 may support the drive ring 85 so that the drive ring 85 may not be pushed forwardly with respect to the second carrier 22.

The carrier 20 including the first carrier 21 and the second carrier 22 may be integrally formed with the carrier hub 10 to be rotationally constrained. Accordingly, the drive shaft 81, the drive plate 82, the carrier 20 and the carrier hub 10 may integrally rotatable.

Based on the flange 11of the carrier hub 10, a second piston 52 may be installed in the front and a first piston 51 may be installed in the rear. In other words, the first piston 51 and the second piston 52 may be respectively disposed in spaces facing each other, with the flange 11 interposed therebetween.

The first piston 51 may be movable forward to press the first clutch assembly 31 and backward to release the pressure applied to the first clutch assembly 31. When the first piston 51 presses the first clutch assembly 31, the rotational force of the first carrier 21 may be transmitted to the first driven plate 41 through the first clutch assembly 31. When the first piston 21 release the pressure applied to the first clutch assembly 31, the rotational force of the first carrier 21 may not be transmitted to the first driven plate 41.

The first piston 51 may contact with an outer circumferential surface of the carrier hub 10, while disposed further behind the flange 11, and sliding-movable with respect to the carrier hub 10 along the axial direction. The first piston 51 may include a first piston-radial extension 511 outwardly extended from the carrier hub 10 along the radial direction. A first compensation chamber-inner diameter seal 622 may be provided in the centripetal end of the first piston-radial extension 511. The first compensation chamber-inner diameter seal 622 may be sliding-movable in contact with the outer circumferential surface of the carrier hub 10. The first compensation chamber-inner diameter seal 622 may seal a gap between the centripetal end of the first piston-radial extension 511 and the carrier hub 10.

A first piston-axial extension 512 may be connected with the distal end of the first piston-radial extension 511. The first piston-axial extension 512 may be backwardly extended from the first piston-radial extension 511 along the axial direction.

The outer diameter of the first piston-axial extension 512 may be smaller than the inner diameter of the carrier-axial extension 202. A predetermined area of the outer circumferential surface of the first piston-axial extension 512 may face the inner circumferential surface of the carrier-axial extension 202. A first compensation chamber-outer diameter seal 621 may be provided in the outer circumferential surface of the first piston-axial extension 512. The first compensation chamber-outer diameter seal 621 may be sliding-movable in contact with the inner circumferential surface of the carrier-axial extension 202. The first compensation chamber-outer diameter seal 621 may be disposed between the inner circumferential surface of the carrier-axial extension 202 and the outer circumferential surface of the first piston-axial extension 512, and seal the gap formed therebetween.

An auxiliary cylinder 75 may be provided in the inner circumferential surface of the carrier-axial extension 202. The auxiliary cylinder 75 may be secured to the carrier 20 by welding or the like. The auxiliary cylinder 75 may include an auxiliary cylinder-axial extension 751provided in contact with the inner circumferential surface of the carrier-axial extension 202. The auxiliary cylinder-axial extension 751 may serve to more precisely provide the bore shape of the inner circumferential surface of the carrier-axial extension 202.

An auxiliary cylinder-radial extension 752 may be connected with the front end of the carrier-axial extension 202. The auxiliary cylinder-radial extension 752 may be extended from the carrier-axial extension 202 inwardly along the radial direction. The auxiliary cylinder-radial extension 752 may be forwardly supported by the flange 11. The auxiliary cylinder-radial extension 752 may support a front end of a first spring 623 extended along the front-rear direction and providing elasticity in the axially widening direction. The rear end of the first spring 623 may be supported by the first piston-radial extension 511 of the first piston 51. Accordingly, the first piston 51 may be provided with elasticity in the backward direction by the first spring 623.

A rear guide cylinder 71 may be provided behind the first piston 51.

The rear guide cylinder 71 may be disposed in contact with the outer circumferential surface of the carrier hub 10. The rear guide cylinder 71 may include a rear guide-radial extension 711 outwardly extended from the outer circumferential surface of the carrier hub 10 along the radial direction. A first pressure chamber-inner diameter seal 612 may be provided in the centripetal end of the rear guide-radial extension 711. The first pressure chamber-inner diameter seal 612 may be disposed between the carrier hub 10 and the rear guide-radial extension 711 and configured to seal the gap formed therebetween.

A stopper 712 may be provided in the rear guide-radial extension 711 of the rear guide cylinder 71. The stopper 712 may be forwardly protruded to be in contact with the rear surface of the first piston-radial extension 511. The stopper 712 may define a rear limit of the sliding movement of the first piston 51.

A rear guide-axial extension 713 extended from the rear guide-radial extension 711 along the axial direction may be connected with the distal end of the rear guide-radial extension 711 of the rear guide cylinder 71. The outer circumferential surface of the rear guide-axial extension 713 may face the inner circumferential surface of the first piston-axial extension 512 provided in the first piston 51.

A first pressure chamber-outer diameter seal 611 may be provided in the outer circumferential surface of the rear guide-axial extension 713. The first pressure chamber-outer diameter seal 611 may be relatively sliding-movable in contact with the inner circumferential surface of the first piston-axial extension 512. The first pressure chamber-outer diameter seal 611 may seal the gap formed between the outer circumferential surface of the rear guide-axial extension 713 and the inner circumferential surface of the first piston-axial extension 512. The stopper 712 may also serve as spacer to provide a predetermined gap between the first pressure chamber-outer diameter seal and the first piston-radial extension 511, to prevent the front end of the first pressure chamber-outer diameter seal 611 from being press and damaged by the first piston-radial extension 511 of the first piston.

A rear guide-snap ring 73 may be provided behind the rear guide cylinder 71 in the outer circumferential surface of the carrier hub 10. The rear guide-snap ring 73 may support the rear guide cylinder 71 so that the rear guide cylinder 71 may not be pushed backwardly.

A first compensation chamber 62 may be disposed between the flange 11 and the first piston 51. The outer diameter of the first compensation chamber 62 may be defined by the inner circumferential surface of the carrier-axial extension 202, more particularly, the inner circumferential surface of the auxiliary cylinder-axial extension 751. The first compensation chamber may be defined by the inner circumferential surface of the carrier-axial extension 202, the rear surface of the flange 11, the outer circumferential surface of the carrier hub 10 and the front surface of the first piston-radial extension 511.

A first pressure chamber 61 may be disposed between the first piston 51 and the rear guide cylinder 71. The outer diameter of the first pressure chamber 61 may be defined by the inner circumferential surface of the first piston-axial extension 512. The first pressure chamber 61 may be defined by the inner circumferential surface of the first piston-axial extension 512, the rear surface of the first piston-radial extension 511, the outer circumferential surface of the carrier hub 10 and the front surface of the rear guide-radial extension 711 provided in the rear guide cylinder 71.

When hydraulic pressure is filled in the first pressure chamber 61, the hydraulic pressure may act as much as a cross-sectional area between the inner circumferential surface of the first piston-axial extension 512 and the outer circumferential surface of the carrier hub 10 and then press the first piston forwardly. The hydraulic pressure of the first pressure chamber 61 may overcome the elasticity of the first spring 623 and sliding-move the first piston 51 forwardly. When the hydraulic pressure of the first pressure chamber 61 is released, the first piston 51 may return to the rear position by the elasticity of the first spring 623.

The second piston 52 may move forwardly to press the second clutch assembly 32, and move backwardly to release the pressure applied to the second clutch assembly 32. When the second piston 52 presses the second clutch assembly 32, the rotational force of the second carrier 22 may be transmitted to the second driven plate 42 through the second clutch assembly 32. When the second piston 52 releases the pressure applied to the second clutch assembly 32, the rotational force of the second carrier 22 may not be transmitted to the second driven plate 42 through the second clutch assembly 32.

The second piston 52 may be in contact with the outer circumferential surface of the carrier hub 10 in front of the flange 11 and axially sliding-movable with respect to the carrier hub 10. The second piston 52 may include a second piston-radial extension 521 outwardly extended from the carrier hub 10 along the radial direction. A second pressure chamber-inner diameter seal 633 may be provided in the centripetal end of the second piston-radial extension 521. The second pressure chamber-inner diameter seal 633 may be sliding-movable in contact with the outer circumferential surface of the carrier hub 10. The second pressure chamber-inner diameter seal 633 may seal the gap formed between the centripetal end of the second piston-radial extension 521 and the carrier hub 10.

A second piston-inner axial extension 522 may be connected with the distal end of the second piston-radial extension 521. The second piston-inner axial extension 522 may be extended forward from the second piston-radial extension along the axial direction.

The outer diameter of the second piston-inner axial extension 522 may be smaller than the inner diameter of the hub-axial extension 12. A predetermined area of the outer circumferential surface of the second piston-axial extension 522 may face the inner circumferential surface of the hub-axial extension 12. A second pressure chamber-outer diameter seal 632 may be provided in the outer circumferential surface of the second piston-inner axial extension 522. The second pressure chamber-outer diameter seal 632 may be sliding-movable in contact with the inner circumferential surface of the hub-axial extension 12. The second pressure chamber-outer diameter seal 632 may be provided between the inner circumferential surface of the hub-axial extension 12 and the outer circumferential surface of the second piston-inner axial extension 522, and seal the gap formed therebetween.

A second piston-outer axial extension 523 may be connected with the front end of the second piston-inner axial extension 522, spaced a predetermined distance apart from each other in the radial direction. The distance between the second piston-inner axial extension 522 and the second piston-outer axial extension 523in the radial direction may be greater than the radial thickness of the hub-axial extension 12.

The inner circumferential surface of the second piston-outer axial extension 523 may face the outer circumferential surface of the hub-axial extension 12 and the outer circumferential surface of the carrier-axial extension 202. In addition, the outer circumferential surface of the second piston-outer axial extension 523 may face the inner circumferential surface of the second driven plate 42. Accordingly, the maximum radius of the hub-axial extension 12 and the maximum radius of the carrier-axial extension 202 may be secured.

A front guide cylinder 72 may be provided in a front area of the second piston 52.

The front guide cylinder 72 may be provided in the outer circumferential surface of the carrier hub 10. The front guide cylinder 72 may include a front guide-radial extension 721 outwardly extended from the carrier hub 10 along the radial direction.

A front guide-axial extension 723 backwardly extended from the front guide-radial extension 721 along the axial direction may be connected with the distal end of the front guide-radial extension 721. The outer circumferential surface of the front guide-axial extension 723 may face the inner circumferential surface of the second piston-inner axial extension 522.

A second compensation chamber-outer diameter seal 641 may be provided in the outer circumferential surface of the front guide-axial extension 723. The second compensation-outer diameter seal 641 may be sliding-movable in contact with the inner circumferential surface of the second piston-inner axial extension 522. The second compensation chamber-outer diameter seal 641 may seal the gap formed between the outer circumferential surface of the front guide-axial extension 723 and the inner circumferential surface of the second piston-inner axial extension 522.

A front guide-snap ring 74 may be provided in a front area of the front guide cylinder 72 in the outer circumferential surface of the carrier hub 10. The front guide-snap ring 74 may support the front guide cylinder 72 so that the front guide cylinder 72 may not be pushed forwardly.

A second pressure chamber 63 may be disposed between the second piston 52 and the flange 11. The outer diameter of the second pressure chamber 63 may be defined by the inner circumferential surface of the hub-axial extension 12. The second pressure chamber 63 may be defined by the inner circumferential surface of the hub-axial extension 12, the rear surface of the second piston-radial extension 521, the outer circumferential surface of the carrier hub 10 and the front surface of the flange 11.

A second compensation chamber 64 may be disposed between the front guide cylinder 72 and the second piston 52. The outer diameter of the second compensation chamber 64 may be defined by the inner circumferential surface of the second piston-inner axial extension 522. The second compensation chamber 64 may be defined by the inner circumferential surface of the second piston-inner axial extension 522, the inner circumferential surface of the front guide-axial extension 723, the front guide-radial extension of the front guide cylinder 72 provided in the flange 11, the outer circumferential surface of the carrier hub 10 and the front surface of the second piston-radial extension 521.

The front guide-radial extension 721 may face the rear surface of the second driven plate 42. The front guide-radial extension 721 may support a front end of the second spring 642 extended in the front-back direction to provide the elasticity widening in the axial direction. The rear end of the second spring 642 may be supported by the second piston-radial extension 521 of the second piston 52. Accordingly, the second piston 52 may be provided with the elasticity in the rear direction by the second spring 642.

When hydraulic pressure is filled in the second pressure chamber 63, the hydraulic pressure may act as much as a cross-sectional area between the inner circumferential surface of the hub-axial extension 12 and the outer circumferential surface of the carrier hub 10, and then press the second piston 52 forwardly. The hydraulic pressure of the second pressure chamber 61 may overcome the elasticity of the second spring 642 and sliding-move the second piston 52 forwardly. When the hydraulic pressure of the second pressure chamber 63 is released, the second piston 52 may return to the rear position by the elasticity of the second spring 642.

According to the above-mentioned structure, the outer diameter of the second pressure chamber 63 may be larger than the outer diameter of the second compensation chamber 64. Therefore, the pressing force applied to the second piston 52 in the second pressure chamber 63 may be sufficiently secured, even without increasing the hydraulic pressure. Accordingly, the transmission torque capacity may be sufficiently secured through the second clutch assembly 32, without increasing the friction plate of the second clutch assembly 32.

In addition, according to the above-mentioned structure, the carrier axial extension 202 of the carrier 20 may be used as a radially outer boundary of the first compensation chamber 62 and the first piston-axial extension 512 of the first piston 51 may be sliding-movable thereon, and the first piston-axial extension 512 of the first piston 51 may be used as a radially outer boundary of the first pressure chamber 61. Accordingly, the pressurized cross-sectional area of the first pressure chamber 61 can be also sufficiently secured.

The front guide cylinder 72 may be detachably coupled to the carrier hub 10 in the front area of the second piston 52. The rear guide cylinder 71 described above may be also detachably coupled to the carrier hub 10 in the rear area of the first piston 51. Accordingly, the first piston 51 and the rear guide cylinder 71 may be assembled or disassembled behind the flange 11. The second piston and the front guide cylinder 72 may be assembled or disassembled in front of the flange 11.

The front limit of the axial stroke of the first piston 51 may be determined based by the first clutch assembly 31 and the rear limit may be determined by the stopper 712 of the rear guide cylinder 71.

The front limit of the axial stroke of the second piston 52 may be determined by the second clutch assembly 32 and the rear limit may be determined by the carrier-radial extension 203 of the carrier 20.

The carrier hub 10 may include a first pressure path 911 configured to supply oil to the first pressure chamber 61 and a second pressure path 912 configured to supply oil to the second pressure chamber 63. The two paths may be provided as separate channel, respectively.

The carrier hub 10 may include a first compensation path 921 configured to supply oil to the first compensation chamber 62 and a second compensation path 922 configured to supply oil to the second compensation chamber 64. The oil flowing along the compensation path 92 may cool down each part of the dual clutch device 10, while flowing inside of the dual clutch device 1.

The carrier-axial extension 202 of the carrier 20 may have a carrier-hole 23, and the second piston-outer axial extension 523 of the second piston 52 may have a piston-hole 524. In the locus of the sliding second piston 52, the carrier-hole 23 and the piston-hole 524 may face each other. Accordingly, the oil flowing along the compensation path 92 may pass through the carrier-hole 23 and the piston-hole 524.

The embodiments are described above with reference to a number of illustrative embodiments thereof. However, the present disclosure is not intended to limit the embodiments and drawings set forth herein, and numerous other modifications and embodiments can be devised by one skilled in the art, always limited by the scope of the appended claims.

## Claims

1. A dual clutch device comprising:
a carrier hub (10) extended along an axial direction and including a flange (11) outwardly extended from the carrier hub (10) in a radial direction and a hub-axial extension (12) forwardly extended from a distal end of the flange (11);
a carrier (20) including i) a carrier-axial extension (202) connected with the flange (11) backwardly extended from a distal end of the flange (11), ii) a carrier-radial extension (203) outwardly extended from the carrier-axial extension along the radial direction, iii) a first carrier (21) connected to the carrier-radial extension (203), and iv) a second carrier (22) having a smaller radius than the first carrier and connected to the carrier-radial extension (203);
a first clutch assembly (31) provided in the first carrier (21);
a second clutch assembly (32) provided in the second carrier (32);
a first driven plate (41) coupled to or decoupled from the first carrier (21), with the first clutch assembly (31) interposed therebetween;
a second driven plate (42) coupled to or decoupled from the second carrier (22) , with the second clutch assembly (32) interposed therebetween;
a first piston (51) sliding-movable with respect to the carrier hub (10) behind the flange (11) along the axial direction, and forwardly sliding to press the first clutch assembly (31) and couple the first carrier (21) and the first driven plate (41) to each other not to relatively rotate and backwardly sliding to release the pressure applied to the first clutch assembly (31) to release the coupling between the first carrier (21) and the first driven plate (41);
a second piston (52) sliding-movable with respect to the carrier hub (10) in front of the flange (11) along the axial direction, and forwardly sliding to press the second clutch assembly (32) not to relatively rotate and backwardly sliding to release the pressure applied to the second clutch assembly (32) to release the coupling between the second carrier (22) and the second driven plate(42), the second piston (52) comprises:
a second piston-radial extension (521) radially extended from the carrier hub (10);
a second piston-inner axial extension (522) axially extended from the second piston-radial extension (521) and a second piston-outer axial extension (523) extended from a radially outer area with respect to the second piston-inner axial extension (522) along the axial direction,
at least predetermined area of the outer circumferential surface of the second piston-inner axial extension (522) faces the inner circumferential surface of the hub-axial extension (12) and the inner circumferential surface of the second piston-outer axial extension (523) faces the outer circumferential surface of the hub-axial extension (12) and the outer circumferential surface of the carrier-axial extension (202);
a first compensation chamber (62) provided between the first piston (51) and the flange (11);
a first pressure chamber (61) provided behind the first piston (51) and filled with a fluid for forwardly pressing the first piston (51);
a second pressure chamber (63) provided between the second piston (52) and the flange (11) and filled with a fluid for forwardly pressing the second piston (52); and
a second compensation chamber (64) facing the second pressure chamber (63), with the second piston (52) interposed therebetween, **characterized in that**:
wherein the hub-axial extension (12) and the carrier-axial extension (202) substantially have the same radius, the inner circumferential surface of the hub-axial extension (12) defines an outer circumferential surface of the second pressure chamber(63), and the inner circumferential surface of the carrier-axial extension (202) defines an outer diameter of the first compensation chamber (62).

2. The dual clutch device of claim 1, further comprising:
a second pressure chamber-outer diameter seal (632) provided between the inner circumferential surface of the hub-axial extension (12) and the second piston-inner axial extension (522).

3. The dual clutch device of claim 1, wherein the outer circumferential surface of the carrier hub (10), the front surface of the flange (11), the inner circumferential surface of the hub-axial extension (12) and the rear surface of the second piston-radial extension (521) define the second pressure chamber.

4. The dual clutch device of claim 1, wherein the inner circumferential surface of the second piston-inner axial extension (522) defines the outer diameter of the second compensation chamber (64), and
the outer diameter of the second pressure chamber (63) is larger than the outer diameter of the second compensation chamber (64).

5. The dual clutch device of claim 4 further comprising:
a front guide cylinder (72) connected with the carrier hub (10) in a front area of the second-piston-radial extension (521),
wherein the front guide cylinder (72) comprises,
a front guide-radial extension (721) outwardly extended from the connecting portion with the carrier hub (10) along the radial direction and facing the rear surface of the second driven plate (42); and
a front guide-axial extension (723) extended from the front guide-radial extension (721) along the axial direction, with at least predetermined area of the outer circumferential surface thereof faces the inner circumferential surface of the second piston-inner axial extension (522).

6. The dual clutch device of claim 5, further comprising:
a second compensation chamber-outer diameter seal (641) provided between the inner circumferential surface of the second piston-inner axial extension (522) and the outer circumferential surface of the front guide-axial extension (723).

7. The dual clutch device of claim 5, wherein the outer circumferential surface of the carrier hub (10), the front surface of the second piston-radial extension (521), the inner circumferential surface of the second piston-inner axial extension (522), the inner circumferential surface of the front guide-axial extension (723) and the rear surface of the front guide-radial extension (721) define the second compensation chamber (64).

8. The dual clutch device of claim 1, wherein the second piston-outer axial extension (523) comprises a piston-hole (524) through which oil for flowing in the first compensation chamber (62) passes.

9. The dual clutch device of claim 8, wherein the carrier hub (10) comprises a compensation path (92) provided as a channel for supplying the oil to the first compensation chamber (62) and the second compensation chamber (64), and
the carrier (20) comprises a carrier-hole (23) facing the piston-hole (524), and
the oil supplied along the compensation path (92) flows through the carrier-hole (23) and the piston-hole (524).

10. The dual clutch device of claim 1, wherein the first piston (51) comprises,
a first piston-radial extension (511) extended from the carrier hub (10) along the radial direction;
a first piston-axial extension (512) extended from the first piston-radial extension along the axial direction (511), and
at least predetermined area of the outer circumferential surface of the first piston-axial extension (512) faces the inner circumferential surface of the carrier-axial extension (202).

11. The dual clutch device of claim 10, further comprising:
a rear guide cylinder (71) detachably coupled to the carrier hub (10) behind the first piston (51),
wherein the rear guide cylinder (71) comprises,
a rear guide-radial extension (711) outwardly extended from a connecting portion with the carrier hub (10) along the radial direction;
a stopper (712) provided in the rear guide-radial extension (711) and more forwardly protruded than the rear guide-radial extension (711), the stopper (712) in contact with the rear surface of the first piston-radial extension (511) and limiting the backward movement of the first piston (51); and
a rear guide-axial extension (713) backwardly extended from the rear guide-radial extension (711) and having the outer circumferential surface of which at least predetermined area faces the inner circumferential surface of the first piston-axial extension (512).

12. The dual clutch device of claim 1, wherein the carrier hub (10) comprises a pressure path (91) provided as a channel for supplying oil to the first pressure chamber (61) and the second pressure chamber (63).

## Patentansprüche

1. Doppelkupplungsvorrichtung, umfassend:
eine Trägernabe (10), die sich entlang einer axialen Richtung erstreckt und einen Flansch (11), der sich von der Trägernabe (10) in einer radialen Richtung nach außen erstreckt, und eine axiale Nabenverlängerung (12), die sich von einem distalen Ende des Flansches (11) nach vorn erstreckt, aufweist;
einen Träger (20), aufweisend i) eine axiale Trägerverlängerung (202), die mit dem Flansch (11) verbunden ist und sich von einem distalen Ende des Flansches (11) nach hinten erstreckt, ii) eine radiale Trägerverlängerung (203), die sich von der axialen Trägerverlängerung entlang der radialen Richtung nach außen erstreckt, iii) einen ersten Träger (21), der mit der radialen Trägerverlängerung (203) verbunden ist, und iv) einen zweiten Träger (22), der einen kleineren Radius als der erste Träger aufweist und mit der radialen Trägerverlängerung (203) verbunden ist;
eine erste Kupplungsanordnung (31), die in dem ersten Träger (21) angeordnet ist;
eine zweite Kupplungsanordnung (32), die in dem zweiten Träger (32) angeordnet ist;
eine erste angetriebene Platte (41), die mit dem ersten Träger (21) gekoppelt oder von diesem entkoppelt wird, während die erste Kupplungsanordnung (31) dazwischen angeordnet ist;
eine zweite angetriebene Platte (42), die mit dem zweiten Träger (22) gekoppelt oder von diesem entkoppelt wird, während die zweite Kupplungsanordnung (32) dazwischen angeordnet ist;
einen ersten Kolben (51), der in Bezug auf die Trägernabe (10) hinter dem Flansch (11) entlang der axialen Richtung verschiebbar ist und nach vorn gleitet, um gegen die erste Kupplungsanordnung (31) zu drücken und den ersten Träger (21) und die erste angetriebene Platte (41) miteinander zu koppeln, damit sie sich nicht relativ drehen, und nach hinten gleitet, um den auf die erste Kupplungsanordnung (31) ausgeübten Druck aufzuheben, um die Kopplung zwischen dem ersten Träger (21) und der ersten angetriebenen Platte (41) zu lösen;
einen zweiten Kolben (52), der in Bezug auf die Trägernabe (10) vor dem Flansch (11) entlang der axialen Richtung verschiebbar ist und nach vorn gleitet, um gegen die zweite Kupplungsanordnung (32) zu drücken, damit sie sich nicht relativ dreht, und nach hinten gleitet, um den auf die zweite Kupplungsanordnung (32) ausgeübten Druck aufzuheben, um die Kopplung zwischen dem zweiten Träger (22) und der zweiten angetriebenen Platte (42) zu lösen, wobei der zweite Kolben (52) umfasst:
eine zweite radiale Kolbenverlängerung (521), die sich radial von der Trägernabe (10) erstreckt;
eine zweite innere axiale Kolbenverlängerung (522), die sich axial von der zweiten radialen Kolbenverlängerung (521) erstreckt, und eine zweite äußere axiale Kolbenverlängerung (523), die sich von einem radial äußeren Bereich in Bezug auf die zweite innere axiale Kolbenverlängerung (522) entlang der axialen Richtung erstreckt,
wobei mindestens ein zuvor festgelegter Bereich der Außenumfangsfläche der zweiten inneren axialen Kolbenverlängerung (522) der Innenumfangsfläche der axialen Nabenverlängerung (12) zugewandt ist und die Innenumfangsfläche der zweiten äußeren axialen Kolbenverlängerung (523) der Außenumfangsfläche der axialen Nabenverlängerung (12) und der Außenumfangsfläche der axialen Trägerverlängerung (202) zugewandt ist;
eine erste Ausgleichskammer (62), die zwischen dem ersten Kolben (51) und dem Flansch (11) angeordnet ist;
eine erste Druckkammer (61), die hinter dem ersten Kolben (51) angeordnet und mit einem Fluid zum Drücken des ersten Kolbens (51) nach vorn gefüllt ist;
eine zweite Druckkammer (63), die zwischen dem zweiten Kolben (52) und dem Flansch (11) angeordnet und mit einem Fluid zum Drücken des zweiten Kolbens (52) nach vorn gefüllt ist; und
eine zweite Ausgleichskammer (64), die der zweiten Druckkammer (63) zugewandt ist, während der zweite Kolben (52) dazwischen angeordnet ist, **dadurch gekennzeichnet, dass**:
die axiale Nabenverlängerung (12) und die sich axiale Trägerverlängerung (202) im Wesentlichen den gleichen Radius aufweisen, die Innenumfangsfläche der axialen Nabenverlängerung (12) eine Außenumfangsfläche der zweiten Druckkammer (63) definiert und die Innenumfangsfläche der axialen Trägerverlängerung (202) einen Außendurchmesser der ersten Ausgleichskammer (62) definiert.

2. Doppelkupplungsvorrichtung nach Anspruch 1, des Weiteren umfassend:
eine zweite Druckkammer-Außendurchmesserdichtung (632), die zwischen der Innenumfangsfläche der axialen Nabenverlängerung (12) und der zweiten inneren axialen Kolbenverlängerung (522) angeordnet ist.

3. Doppelkupplungsvorrichtung nach Anspruch 1, wobei die Außenumfangsfläche der Trägernabe (10), die Vorderseite des Flansches (11), die Innenumfangsfläche der axialen Nabenverlängerung (12) und die Rückseite der zweiten radialen Kolbenverlängerung (521) die zweite Druckkammer definieren.

4. Doppelkupplungsvorrichtung nach Anspruch 1, wobei die Innenumfangsfläche der zweiten inneren axialen Kolbenverlängerung (522) den Außendurchmesser der zweiten Ausgleichskammer (64) definiert und
der Außendurchmesser der zweiten Druckkammer (63) größer ist als der Außendurchmesser der zweiten Ausgleichskammer (64) .

5. Doppelkupplungsvorrichtung nach Anspruch 4, des Weiteren umfassend:
einen vorderen Führungszylinder (72), der mit der Trägernabe (10) in einem vorderen Bereich der zweiten radialen Kolbenverlängerung (521) verbunden ist,
wobei der vordere Führungszylinder (72) umfasst:
eine vordere radiale Führungsverlängerung (721), die sich von dem Verbindungsabschnitt mit der Trägernabe (10) entlang der radialen Richtung nach außen erstreckt und der Rückseite der zweiten angetriebenen Platte (42) zugewandt ist; und
eine vordere axiale Führungsverlängerung (723), die sich von der vorderen radialen Führungsverlängerung (721) entlang der axialen Richtung erstreckt, wobei mindestens ein zuvor festgelegter Bereich ihrer Außenumfangsfläche der Innenumfangsfläche der zweiten inneren axialen Kolbenverlängerung (522) zugewandt ist.

6. Doppelkupplungsvorrichtung nach Anspruch 5, des Weiteren umfassend:
eine zweite Ausgleichskammer-Außendurchmesserdichtung (641), die zwischen der Innenumfangsfläche der zweiten inneren axialen Kolbenverlängerung (522) und der Außenumfangsfläche der vorderen axialen Führungsverlängerung (723) angeordnet ist.

7. Doppelkupplungsvorrichtung nach Anspruch 5, wobei die Außenumfangsfläche der Trägernabe (10), die Vorderseite der zweiten radialen Kolbenverlängerung (521), die Innenumfangsfläche der zweiten inneren axialen Kolbenverlängerung (522), die Innenumfangsfläche der vorderen axialen Führungsverlängerung (723) und die Rückseite der vorderen radialen Führungsverlängerung (721) die zweite Ausgleichskammer (64) definieren.

8. Doppelkupplungsvorrichtung nach Anspruch 1, wobei die zweite äußere axiale Kolbenverlängerung (523) ein Kolbenloch (524) umfasst, durch das Öl zum Fließen in der ersten Ausgleichskammer (62) gelangt.

9. Doppelkupplungsvorrichtung nach Anspruch 8, wobei die Trägernabe (10) einen Ausgleichspfad (92) umfasst, der als ein Kanal zum Zuführen des Öls zu der ersten Ausgleichskammer (62) und der zweiten Ausgleichskammer (64) bereitgestellt ist, und
der Träger (20) ein Trägerloch (23) umfasst, das dem Kolbenloch (524) zugewandt ist, und
Öl, das entlang des Ausgleichspfades (92) zugeführt wird,
durch das Trägerloch (23) und das Kolbenloch (524) fließt.

10. Doppelkupplungsvorrichtung nach Anspruch 1, wobei der erste Kolben (51) umfasst:
eine erste radiale Kolbenverlängerung (511), die sich von der Trägernabe (10) entlang der radialen Richtung erstreckt;
eine erste axiale Kolbenverlängerung (512), die sich von der ersten radialen Kolbenverlängerung entlang der axialen Richtung (511) erstreckt, und
wobei mindestens ein zuvor festgelegter Bereich der Außenumfangsfläche der ersten axialen Kolbenverlängerung (512) der Innenumfangsfläche der axialen Trägerverlängerung (202) zugewandt ist.

11. Doppelkupplungsvorrichtung nach Anspruch 10, des Weiteren umfassend:
einen hinteren Führungszylinder (71), der hinter dem ersten Kolben (51) lösbar mit der Trägernabe (10) gekoppelt ist,
wobei der hintere Führungszylinder (71) umfasst:
eine hintere radiale Führungsverlängerung (711), die sich von einem Verbindungsabschnitt mit der Trägernabe (10) entlang der radialen Richtung nach außen erstreckt;
einen Endanschlag (712), der in der hinteren radialen Führungsverlängerung (711) angeordnet ist und weiter nach vorn vorsteht als die hintere radiale Führungsverlängerung (711), wobei der Endanschlag (712) mit der Rückseite der ersten radialen Kolbenverlängerung (511) in Kontakt steht und die Rückwärtsbewegung des ersten Kolbens (51) begrenzt; und
eine hintere axiale Führungsverlängerung (713), die sich von der hinteren radialen Führungsverlängerung (711) nach hinten erstreckt und die Außenumfangsfläche aufweist, von der mindestens der zuvor festgelegten Bereich der Innenumfangsfläche der ersten axialen Kolbenverlängerung (512) zugewandt ist.

12. Doppelkupplungsvorrichtung nach Anspruch 1, wobei die Trägernabe (10) einen Druckpfad (91) umfasst, der als ein Kanal zum Zuführen von Öl zu der ersten Druckkammer (61) und der zweiten Druckkammer (63) bereitgestellt ist.

## Revendications

1. Dispositif d'embrayage double comprenant :
un moyeu de support (10) s'étendant le long d'une direction axiale et incluant une bride (11) s'étendant vers l'extérieur à partir du moyeu de support (10) dans une direction radiale et une extension axiale de moyeu (12) s'étendant vers l'avant à partir d'une extrémité distale de la bride (11) ;
un support (20) incluant i) une extension axiale de support (202) reliée à la bride (11) s'étendant vers l'arrière à partir d'une extrémité distale de la bride (11), ii) une extension radiale de support (203) s'étendant vers l'extérieur à partir de l'extension axiale de support le long de la direction radiale, iii) un premier support (21) relié à l'extension radiale de support (203), et iv) un second support (22) ayant un rayon plus petit que le premier support et relié à l'extension radiale de support (203) ;
un premier assemblage d'embrayage (31) agencé dans le premier support (21) ;
un second assemblage d'embrayage (32) agencé dans le second support (32) ;
un premier disque d'embrayage (41) accouplé au premier support (21) ou désaccouplé de celui-ci, avec le premier assemblage d'embrayage (31) intercalé entre ceux-ci ;
un second disque d'embrayage (42) accouplé au second support (22) ou désaccouplé de celui-ci, avec le second assemblage d'embrayage (32) intercalé entre ceux-ci ;
un premier piston (51) mobile par coulissement par rapport au moyeu de support (10) derrière la bride (21) le long de la direction axiale, et coulissant vers l'avant pour presser le premier assemblage d'embrayage (31) et accoupler le premier support (21) et le premier disque d'embrayage (41) l'un à l'autre sans tourner de manière relative et coulissant vers l'arrière pour libérer la pression appliquée au premier assemblage d'embrayage (31) pour libérer l'accouplement entre le premier support (21) et le premier disque d'embrayage (41) ;
un second piston (52) mobile par coulissement par rapport au moyeu de support (10) devant la bride (11) le long de la direction axiale, et coulissant vers l'avant pour presser le second assemblage d'embrayage (32) pour ne pas tourner relativement et coulissant vers l'arrière pour libérer la pression appliquée sur le second assemblage d'embrayage (32) pour libérer l'accouplement entre le second support (22) et le second disque d'embrayage (42),
le second piston (52) comprenant :
une extension radiale de second piston (521) s'étendant radialement à partir du moyeu de support (10) ;
une extension axiale intérieure de second piston (522) s'étendant axialement à partir de l'extension radiale de second piston (521) et une extension axiale extérieure de second piston (523) s'étendant à partir d'une zone radialement extérieure par rapport à l'extension axiale intérieure de second piston (522) le long de la direction axiale,
au moins une zone prédéterminée sur la surface circonférentielle extérieure de l'extension axiale intérieure de second piston (522) est dirigée vers la surface circonférentielle intérieure de l'extension axiale de moyeu (12) et la surface circonférentielle intérieure de l'extension axiale extérieure de second piston (523) est dirigée vers la surface circonférentielle extérieure de l'extension axiale de moyeu (12) et la surface circonférentielle extérieure de l'extension axiale de support (202) ;
une première chambre de compensation (62) agencée entre le premier piston (51) et la bride (11) ;
une première chambre de pression (61) agencée derrière le premier piston (51) et remplie d'un fluide pour presser le premier piston (51) vers l'avant ;
une seconde chambre de pression (63) agencée entre le second piston (52) et la bride (11) et remplie d'un fluide pour presser le second piston (52) vers l'avant ; et
une seconde chambre de compensation (64) dirigée vers la seconde chambre de pression (63), avec le second piston (52) intercalé entre celles-ci, **caractérisé en ce que** :
l'extension axiale de moyeu (12) et l'extension axiale de support (202) ont sensiblement le même rayon, la surface circonférentielle intérieure de l'extension axiale de moyeu (12) définit une surface circonférentielle extérieure de la seconde chambre de pression (63), et la surface circonférentielle intérieure de l'extension axiale de support (202) définit un diamètre extérieur de la première chambre de compensation (62).

2. Dispositif d'embrayage double selon la revendication 1, comprenant en outre :
un joint de diamètre extérieur de seconde chambre de pression (632) agencé entre la surface circonférentielle intérieure de l'extension axiale de moyeu (12) et l'extension axiale intérieure de second piston (522).

3. Dispositif d'embrayage double selon la revendication 1, dans lequel la surface circonférentielle extérieure du moyeu de support (10), la surface avant de la bride (11), la surface circonférentielle intérieure de l'extension axiale de moyeu (12) et la surface arrière de l'extension radiale de second piston (521) définissent la seconde chambre de pression.

4. Dispositif d'embrayage double selon la revendication 1, dans lequel la surface circonférentielle intérieure de l'extension axiale intérieure de second piston (522) définit le diamètre extérieur de la seconde chambre de compensation (64), et
le diamètre extérieur de la seconde chambre de pression (63) est plus grand que le diamètre extérieur de la seconde chambre de compensation (64).

5. Dispositif d'embrayage double selon la revendication 4, comprenant en outre :
un cylindre de guidage avant (72) relié au moyeu de support (10) dans une zone avant de l'extension radiale de second piston (521),
dans lequel le cylindre de guidage avant (72) comprend une extension radiale de guidage avant (721) s'étendant vers l'extérieur à partir de la partie de liaison avec le moyeu de support (10) le long de la direction radiale et dirigée vers la surface arrière du second disque d'embrayage (42) ; et
une extension axiale de guidage avant (723) s'étendant à partir de l'extension radiale de guidage avant (721) le long de la direction axiale, avec au moins une zone prédéterminée de la surface circonférentielle extérieure de celle-ci dirigée vers la surface circonférentielle intérieure de l'extension axiale intérieure de second piston (522).

6. Dispositif d'embrayage double selon la revendication 5, comprenant en outre :
un joint de diamètre extérieur de seconde chambre de compensation (641) agencé entre la surface circonférentielle intérieure de l'extension axiale intérieur de second piston (522) et la surface circonférentielle extérieure de l'extension axiale de guidage avant (723).

7. Dispositif d'embrayage double selon la revendication 5, dans lequel la surface circonférentielle extérieure du moyeu de support (10), la surface avant de l'extension radiale de second piston (521), la surface circonférentielle intérieure de l'extension axiale intérieure de second piston (522), la surface circonférentielle intérieure de l'extension axiale de guidage avant (723) et la surface arrière de l'extension radiale de guidage avant (521) définissent la seconde chambre de compensation (64).

8. Dispositif d'embrayage double selon la revendication 1, dans lequel l'extension axiale extérieure de second piston (523) comprend un trou de piston (524) à travers lequel passe de l'huile pour un écoulement dans la première chambre de compensation (62).

9. Dispositif d'embrayage double selon la revendication 8, dans lequel le moyeu de support (10) comprend un trajet de compensation (92) prévu sous la forme d'un canal pour fournir l'huile à la première chambre de compensation (62) et à la seconde chambre de compensation (64), et le support (20) comprend un trou de support (23) dirigé vers le trou de piston (524), et
l'huile fournie le long du trajet de compensation (92) s'écoule à travers le trou de support (23) et le trou de piston (524).

10. Dispositif d'embrayage double selon la revendication 1, dans lequel le premier piston (51) comprend :
une extension radiale de premier piston (511) s'étendant à partir du moyeu de support (10) le long de la direction radiale ;
une extension axiale de premier piston (512) s'étendant à partir de l'extension radiale de premier piston le long de la direction axiale (511), et
au moins une zone prédéterminée de la surface circonférentielle extérieure de l'extension axiale de premier piston (512) est dirigée vers la surface circonférentielle intérieure de l'extension axiale de support (202).

11. Dispositif d'embrayage double selon la revendication 10, comprenant en outre :
un cylindre de guidage arrière (71) accouplé de manière détachable au moyeu de support (10) derrière le premier piston (51),
dans lequel le cylindre de guidage arrière (71) comprend :
une extension radiale de guidage arrière (711) s'étendant vers l'extérieur à partir d'une partie de liaison avec le moyeu de support (10) le long de la direction radiale ;
une butée (712) agencée dans l'extension radiale de guidage arrière (711) et faisant saillie plus vers l'avant que l'extension radiale de guidage arrière (711), la butée (712) étant en contact avec la surface arrière de l'extension radiale de premier piston (511) et limitant le mouvement du premier piston (51) vers l'arrière ; et
une extension axiale de guidage arrière (713) s'étendant vers l'arrière à partir de l'extension radiale de guidage arrière (711) et ayant la surface circonférentielle extérieure dont au moins une zone prédéterminée est dirigée vers la surface circonférentielle intérieure de l'extension axiale de premier piston (512).

12. Dispositif d'embrayage double selon la revendication 1, dans lequel le moyeu de support (10) comprend un trajet de pression (91) prévu sous la forme d'un canal pour fournir de l'huile à la première chambre de pression (61) et à la seconde chambre de pression (63).
